(19) Europäisches Patentamt
European Patent Office
Office européen des brevets

(11) **EP 2 201 670 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
***H02M 1/44*** *(2007.01)*

(21) Anmeldenummer: **08805086.9**

(22) Anmeldetag: **06.10.2008**

(86) Internationale Anmeldenummer:
**PCT/EP2008/063342**

(87) Internationale Veröffentlichungsnummer:
**WO 2009/050054 (23.04.2009 Gazette 2009/17)**

(54) **VERFAHREN ZUM BETREIBEN EINES SCHALTNETZTEILS**

METHOD FOR OPERATING A SWITCHING POWER SUPPLY

PROCEDE D'EXPLOITATION D'UNE ALIMENTATION A DECOUPAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.10.2007 AT 16672007**

(43) Veröffentlichungstag der Anmeldung:
**30.06.2010 Patentblatt 2010/26**

(73) Patentinhaber: **SIEMENS AKTIENGESELLSCHAFT
80333 München (DE)**

(72) Erfinder:
  • **DEMOULIN, Harald
    A-2340 Mödling (AT)**
  • **LOHNINGER, Ewald
    A-4863 Seewalchen (AT)**

(74) Vertreter: **Maier, Daniel Oliver
Siemens AG
Postfach 22 16 34
80506 München (DE)**

(56) Entgegenhaltungen:
  • JOHNSON S ET AL: "Custom spectral shaping for EMI reduction in electronic ballasts" APPLIED POWER ELECTRONICS CONFERENCE AND EXPOSITION, 2004. APEC '04. N INETEENTH ANNUAL IEEE ANAHEIM, CA, USA 22-26 FEB. 2004, PISCATAWAY, NJ, USA,IEEE, Bd. 1, 22. Februar 2004 (2004-02-22), Seiten 137-142, XP010703124 ISBN: 978-0-7803-8269-5
  • LIN F ET AL: "Reduction of power supply EMI emission by switching frequency modulation" PROCEEDINGS OF THE ANNUAL POWER ELECTRONICS SPECIALISTS CONFERENCE. (PESC). SEATTLE, JUNE 20 - 25, 1993; [PROCEEDINGS OF THE ANNUAL POWER ELECTRONICS SPECIALISTS CONFERENCE. (PESC)], NEW YORK, IEEE, US, Bd. CONF. 24, 20. Juni 1993 (1993-06-20), Seiten 127-133, XP010149021 ISBN: 978-0-7803-1243-2
  • SANTOLARIA A ET AL: "EMI reduction in switched power converters by means of spread spectrum modulation techniques" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US, 20. Juni 2004 (2004-06-20), Seiten 292-296Vol.1, XP010738006 ISBN: 978-0-7803-8399-9
  • ANONYM: "Low Cost Green-Mode PWM Controller for Flyback Converters" SYSTEM GENERAL CORP. / FAIRCHILD SEMICONDUCTOR PRODUCT SPECIFICATION (SG6859), [Online] 28. September 2007 (2007-09-28), Seiten 1-13, XP002517272 Gefunden im Internet: URL:http://www.fairchildsemi.com/ds/SG/SG6 859.pdf>
  • ZHANG Y F ET AL: "EMI reduction of power supplies by Bi-Frequency modulation" APPLIED POWER ELECTRONICS CONFERENCE AND EXPOSITION, 1994. APEC '94. C ONFERENCE PROCEEDINGS 1994., NINTH ANNUAL ORLANDO, FL, USA 13-17 FEB. 1994, NEW YORK, NY, USA,IEEE, 13. Februar 1994 (1994-02-13), Seiten 601-607, XP010118515 ISBN: 978-0-7803-1456-6

- **LI CAI ET AL: "EMI reduction of switching power supply by frequency jitter" INDUSTRY APPLICATIONS CONFERENCE, 2005. FOURTIETH IAS ANNUAL MEETING. CONFERENCE RECORD OF THE 2005 HONG KONG, CHINA 2-6 OCT. 2005, PISCATAWAY, NJ, USA,IEEE, Bd. 4, 2. Oktober 2005 (2005-10-02), Seiten 2790-2793, XP010842803 ISBN: 978-0-7803-9208-3**

**Beschreibung**

Die Erfindung betrifft ein Verfahren zum Betreiben eines Schaltnetzteils, welches ein Schaltelement umfasst, das mittels eines Schaltsignals mit veränderlicher Schaltfrequenz ein- und ausgeschalten wird, wobei zur Bestimmung durchschnittlicher Pegel eines Frequenzspektrums des Schaltsignals eine Frequenzbandbreite vorgegeben wird. Des Weiteren betrifft die Erfindung ein Schaltnetzteil zur Durchführung des Verfahrens.

Schaltnetzteile schalten in der Regel mit einer Taktfrequenz im Kilohertzbereich, wobei Schaltelemente zumeist mittels pulsweitenmodulierter Schaltsignale angesteuert werden. Unter anderem führen die steilen Flanken der pulsweitenmodulierten Schaltsignale zu unerwünschten elektromagnetischen Störungen. Behandelt werden solche Störungen im Rahmen der elektromagnetischen Verträglichkeit (EMV) eines Schaltnetzteils.

Man unterscheidet leitungsgebundene Störungen und Störstrahlung im freien Raum. Um die Auswirkungen der elektromagnetischen Störungen auf andere elektrische Geräte durch ungewollte Verkopplung gering zu halten, sind EMV-Vorschriften einzuhalten. Dabei ist in der Regel eine Frequenzbandbreite zur Bestimmung durchschnittlicher Pegel des Frequenzspektrums eines Schaltsignals festgelegt, wobei maximal zulässige durchschnittliche Störpegel nicht überschritten werden dürfen. Diese Frequenzbandbreite entspricht somit der Filterbandbreite eines Störpegelmessgeräts. Da Störungen bei sehr niedrigen Frequenzen zumeist unproblematisch sind, sehen EMV-Vorschriften in der Regel eine untere Grenzfrequenz für die Bestimmung der durchschnittlichen Störpegel vor. Bei geringen Schaltfrequenzen kann die erste Harmonische eines Frequenzspektrums unterhalb dieser Grenzfrequenz liegen, sodass zur Bestimmung des zulässigen Störpegels Harmonische mit höheren Ordnungszahlen relevant sind.

Zur Einhaltung der EMV-Vorschriften kennt man nach dem Stand der Technik beispielsweise aufwendige Filter, um elektromagnetische Störungen an der Ausbreitung entlang der mit einem Schaltnetzteil verbundenen Leitungen und über den freien Raum zu hindern.

Es ist auch bekannt, bei der Bildung eines Schaltsignals Frequenzmodulationsverfahren einzusetzen, um durchschnittliche Störpegel des Frequenzspektrums zu reduzieren. Dabei wird eine Verbreiterung des Frequenzspektrums (spread spectrum technology) angestrebt, wodurch sich bei gleichbleibender Filterbandbreite eines Störpegelmessgeräts ein geringerer durchschnittlicher Störpegel ergibt.

Derartige Verfahren arbeiten zumeist mit dreieck- oder sägenzahnförmiger Modulationsfunktion, niedriger Modulationsfrequenz und hohem Modulationsindex und sind in einigen am Markt erhältlichen Steuerbausteinen für Schaltnetzteile (z.B. Topswitch) bereits implementiert. Die Spitzenwerte der Störpegel werden dabei nicht herabgesetzt, da die spektralen Komponenten einen geringeren Frequenzabstand zueinander aufweisen als die vorgeschriebene Filterbandbreite eines Störpegelmessgeräts.

Um die elektromagnetische Verträglichkeit eines Schaltnetzteils weiter zu verbessern, ist auch eine Reduktion der Störpegelspitzenwerte anzustreben.

In der Druckschrift Wiemer I.: Freiprogrammierbare Ansteuerung eines Aufwärtswandlers, Studienarbeit TU Dresden, Dresden, 30. November 2001, ist ein chaotisches Frequenzmodulationsverfahren unter Verwendung vieler diskreter Modulationsfrequenzen beschrieben. Damit ist es möglich, das Störspektrum nahezu beliebig den zur Verfügung stehenden Filtern anzupassen und gleichzeitig die Spitzenwerte der Störpegel herabzusetzen. Dieses Verfahren erfordert jedoch den Einsatz eines (Signal-)Prozessors mit großer Rechenleistung.

In den Druckschriften
ZHANG Y F ET AL: "EMI reduction of power supplies by Bi-Frequency modulation" NINTH ANNUAL APPLIED POWER ELECTRONICS CONFERENCE AND EXPOSITION, 1994. APEC '94. CONFERENCE PROCEEDINGS 1994., ORLANDO, FL, USA 13-17 FEB. 1994, Seiten 601-607
sowie
LI CAI ET AL: "EMI reduction of switching power supply by frequency jitter" INDUSTRY APPLICATIONS CONFERENCE, 2005. FOURTIETH IAS ANNUAL MEETING. CONFERENCE RECORD OF THE 2005 HONG KONG, CHINA 2-6 OCT. 2005, Bd. 4, Seiten 2790-2793 werden Verfahren zur Schaltfrequenzmodulation bei Schaltnetzteilen offenbart.

Der Erfindung liegt die Aufgabe zugrunde, die aus dem Stand der Technik bekannten Verfahren zur Verbesserung der elektromagnetischen Verträglichkeit eines Schaltnetzteils weiterzubilden.

Zur Bestimmung eines zulässigen Maximalpegels des Frequenzspektrums des Schaltsignals wird eine untere Grenzfrequenz vorgegeben, als eine kritische Harmonische eines Frequenzspektrums des Schaltsignals ohne Schaltfrequenzmodulation wird jene Harmonische festgelegt, deren Frequenz größer der Grenzfrequenz ist und welche den größten Störpegel aufweist. Zur Modulation der Schaltfrequenz wird dabei ein Modulationsindex vorgegeben, welcher dem Wert des Quotienten von ungefähr 1,42 durch die Ordnungszahl der kritischen Harmonischen entspricht. Damit ist sichergestellt,

dass der Spitzenpegel der kritischen Harmonischen um den maximal möglichen Betrag reduziert wird.

Die kritische Harmonische wird in Abhängigkeit eines Tastverhältnisses des Schaltsignals festgelegt. Mit kleiner werdendem Tastverhältnis enthält das Störspektrum immer mehr Harmonische. Deshalb bedingt ein geändertes Tastverhältnis bei gleich beleibender Grenzfrequenz eine neue Festlegung der kritischen Harmonischen, bei welcher der maximale Störpegel auftritt.

Erfindungsgemäß wird diese Aufgabe gelöst mit einem Verfahren der eingangs genannten Art, wobei die Schaltfrequenz mit einer Modulationsfrequenz größer der Frequenzbandbreite moduliert wird. Die Frequenzbandbreite entspricht dabei der vorgeschriebenen Filterbandbreite eines Störpegelmessgeräts. Das Schaltsignal ist in der Regel als pulsweitenmoduliertes Rechtecksignal ausgebildet, wodurch sich ohne Modulation Spitzenpegel bei den Harmonischen mit ungerader Ordnungszahl ausbilden.

Mit dem erfindungsgemäßen Verfahren wird der Spitzenpegel einer kritischen Harmonischen wirkungsvoll reduziert, indem im Bereich der betreffenden Harmonischen sogenannte Oberwellengruppen ausgebildet werden. Die Pegel der Frequenzen, welche im Frequenzspektrum neben der Frequenz liegen, bei welcher ohne Schaltfrequenzmodulation der Spitzenpegel auftreten würde, weisen dabei annähernd das gleiche Niveau wie der nunmehr reduzierte Spitzenpegel auf. Insbesondere wird damit im unteren Bereich des Frequenzspektrums eine Verringerung der Störpegel bewirkt, wodurch die notwendige Größe der Netzfilterbauelemente reduziert wird. Gerade in diesem Frequenzbereich wirksame Filterbauelemente sind besonders groß.

Das erfindungsgemäße Verfahren ist mit einem oben beschriebenen Modulationsverfahren nach dem Stand der Technik zur weiteren Reduktion des Durchschnittspegels kombinierbar.

Durch die Verwendung von nur maximal fünf diskreten Frequenzen kann das Verfahren als sogenanntes Frequenzumtastverfahren ohne zusätzlichen Prozessor realisiert werden. Das Verfahren ist in einfacher Weise mit dem vorhanden Schaltprozessor bzw. einer Steuerschaltung des Schaltnetzteils realisierbar.

Dabei ist es vorteilhaft, wenn zur Modulation der Schaltfrequenz ein Modulationssignal mit periodischer Signalform vorgegeben wird, im einfachsten Fall ein Rechtecksignal mit zwei diskreten Frequenzen.

Damit wird in einem bestimmten Frequenzbereich die Reduktion des Spitzenpegels und des Durchschnittspegels der Störungen um bis zu 6dB ermöglicht. Insbesondere ist es möglich, mit nur zwei diskreten Frequenzen das Störspektrum im Bereich bis 10 MHz um bis zu 6dB zu reduzieren. Im Bereich über 10 MHz ist ebenfalls eine Reduktion der Störpegel erzielbar, wobei zumeist Interferenzen zwischen den Harmonischen der Schaltfrequenz auftreten.

Neben dem Verfahren hat die Erfindung ein Schaltnetzteil zum Gegenstand, welches ein Schaltelement umfasst, das mittels eines Mikrocontrollers oder einer Steuerschaltung angesteuert wird, wobei der Mikrocontroller oder die Steuerschaltung zur Durchführung des erfindungsgemäßen Verfahrens eingerichtet ist. Das Verfahren wird dabei in einfacher Weise in den zur Steuerung der Schaltsignale verwendeten Mikrocontroller (bzw. in die zur Steuerung der Schaltsignale verwendete Steuerschaltung) implementiert.

Die Erfindung wird nachfolgend in beispielhafter Weise unter Bezugnahme auf die beigefügte Figur erläutert. Es zeigen in schematischen Diagrammen:

Fig. 1 Schaltsignal ohne Modulation, Modulationssignal und moduliertes Schaltsignal in Zeitbereichsdarstellung

Fig. 2 Schaltsignal ohne Modulation in Frequenzbereichsdarstellung

Fig. 3 Moduliertes Schaltsignal in Frequenzbereichsdarstellung

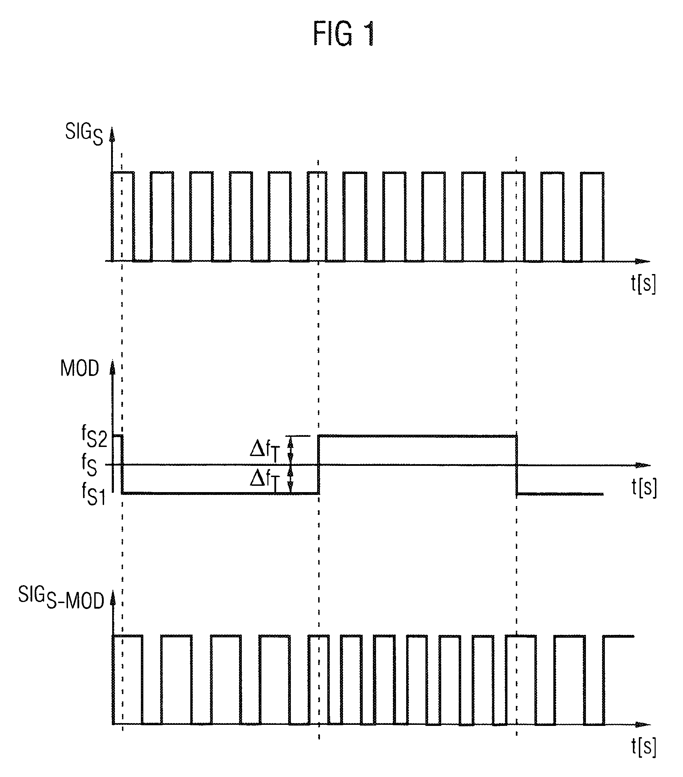

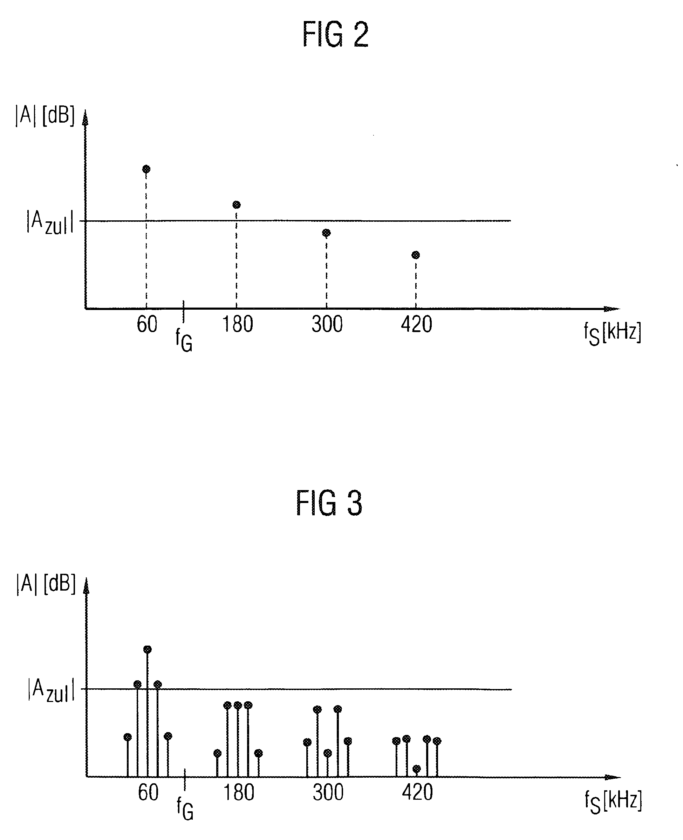

In Figur 1 sind die Verläufe eines beispielhaften Schaltsignals mit und ohne Modulation im Zeitbereich dargestellt. Im oberen Diagramm ist der Verlauf des nicht modulierten Schaltsignals $SIG_S$ (z.B. am Ausgang eines Schaltnetzteilreglers) mit der Schaltfrequenz $f_S$ (z.B. 60kHz) über der Zeit t aufgetragen. Dabei ist ein Tastverhältnis von ungefähr 50% angenommen, sodass im Frequenzspektrum in Figur 2 die ungeraden Harmonischen entsprechende Pegel A aufweisen.

Im Diagramm darunter ist das Modulationssignal MOD beispielhaft als Rechteckfunktion dargestellt. Alternativ dazu kann auch ein Sägezahn-, Dreiecks-, Sinus- oder sonstiges Signal vorgegeben werden. Erfindungsgemäß ist die Modulationsfrequenz $f_M$ größer als die vorgeschriebene Filterbandbreite eines Störpegelmessgerätes (z.B. 10,5kHz bei einer Filterbandbreite von 10kHz).

In Figur 2 ist das nichtmodulierte Signal im Frequenzbereich dargestellt. Das Frequenzspektrum weist bei der ersten, dritten, fünften, siebenten etc. Harmonischen Störpegel auf, wobei der Störpegel der ersten und der dritten Harmonischen einen zulässigen Pegelbetrag $|A_{zul}|$ übersteigen. Da die Vorzeichen der Pegel für die Bewertung der elektromagnetischen Verträglichkeit keine Rolle spielen, sind nur die Beträge der Pegel $|A|$ über der Schaltfrequenz $f_S$ dargestellt.

Die EMV-Vorschriften sehen eine Beschränkung der Störpegel ab einer Grenzfrequenz $f_G$ (z.B. 100Hz) vor. Störpegel, die bei Frequenzen unterhalb dieser Grenzfrequenz $f_G$ auftreten, sind vernachlässigbar. Im vorliegenden Beispiel tritt oberhalb der Grenzfrequenz $f_G$ bei der 3. Harmonischen ein Spitzenstörpegel auf, welcher den zulässigen Pegelbetrag $|A_{zul}|$ übersteigt, daher ist die 3. Harmonische als kritische Harmonische festgelegt. Zur Bestimmung der kritischen Harmonischen kann beispielsweise die Fourier-Transformation oder die Laplace-Transformation dienen.

Figur 3 zeigt das Frequenzspektrum des modulierten Schaltsignals $SIG_{S-MOD}$, dessen Verlauf über der Zeit t im unteren Diagramm in Figur 1 dargestellt ist. Dabei ist der Spitzenpegel der 3. Harmonischen durch beispielhafte Anwendung des erfindungsgemäßen Verfahrens reduziert.

Der Modulationsindex wird vorteilhafterweise mit folgender Formel festgelegt:

$$\eta \;=\; \Delta f / f_M \;\approx\; 1{,}42/n$$

Dabei ist n die Ordnungszahl der kritischen Harmonischen (z.B. 3), $f_M$ die Modulationsfrequenz (z.B. 10,5kHz)und $\Delta f$ der Frequenzhub (Abweichung beiden diskreten Schaltfrequenzen $f_{S1}$, $f_{S2}$ von der Mittelfrequenz $f_S$ im Falle eines rechteckigen Modulationssignals).

Bei einer beispielhaften nicht modulierten Schaltfrequenz $f_S$ gleich 60 kH ergeben sich für das Frequenzumtastverfahren (Modulation mit Rechecksmodulationssignal) folgende diskrete Schaltfrequenzen $f_{S1}$, $f_{S2}$:

$$\Delta f \approx 1{,}42/n \cdot f_M = 1{,}42/3 \cdot 10{,}5 \approx 5 \text{ kHz}$$
$$f_{S1} \approx 55 \text{ kHz}$$
$$f_{S2} \approx 65 \text{ kHz}$$

Aufgrund der hohen Modulationsfrequenz $f_M$ wechselt die Schaltfrequenz $f_S$ zwischen den beiden diskreten Frequenzen $f_{S1}$, $f_{S2}$ nach wenigen Schaltimpulsen (z.B. nach 4 bzw. 6 Schaltimpulsen, wie in Figur 1 im unteren Diagramm dargestellt).

Im Frequenzspektrum (Fig. 3) bilden sich dadurch im Bereich der Harmonischen Oberwellengruppen aus, wobei die Spitzenpegel gegenüber der nicht modulierten Schaltfrequenz $f_S$ (Fig. 2) um bis zu 6 dB reduziert werden. Vor allem die der kritischen Harmonischen entsprechenden Oberwellengruppe weist einen deutlich reduzierten Spitzenpegel auf, da die Pegelwerte der drei mittleren Frequenzen dieser Oberwellengruppe annähernd gleich groß sind.

Als Resultat dieses Modulationsverfahrens liegen alle Spitzenpegel der Oberwellengruppen unterhalb des zulässigen Pegelbetrags $|A_{zul}|$. Dabei kann zusätzlich ein Modulationsverfahren nach dem Stand der Technik zur Reduktion des Durchschnittspegels überlagert werden.

## Patentansprüche

1. Verfahren zum Betreiben eines Schaltnetzteils, welches ein Schaltelement umfasst, das mittels eines Schaltsignals ($SIG_s$) mit veränderlicher Schaltfrequenz ($f_s$) ein- und ausgeschalten wird, wobei zur Einhaltung von EMV-Vorschriften eine Frequenzbandbreite vorgegeben wird, innerhalb derer durchschnittliche Pegel (A) eines Frequenzspektrums des Schaltsignals ($SIG_S$) bestimmbar sind, **dadurch gekennzeichnet, dass** die Schaltfrequenz ($f_S$) mit einer Modulationsfrequenz ($f_M$) größer der Frequenzbandbreite moduliert wird, dass zur Bestimmung eines Maximalpegels des Frequenzspektrums des Schaltsignals ($SIG_S$) eine untere Grenzfrequenz ($f_G$) vorgegeben wird und dass in Abhängigkeit eines Tastverhältnisses des Schaltsignals ($SIG_S$) als eine kritische Harmonische eines Frequenzspektrums des Schaltsignals ($SIG_S$) ohne Schaltfrequenzmodulation jene Harmonische festgelegt wird, deren Frequenz größer der Grenzfrequenz ($f_G$) ist und welche den größten Störpegel (A) aufweist und dass des Weiteren zur Modulation der Schaltfrequenz ($SIG_S$) ein Modulationsindex ($\eta$) vorgegeben wird, welcher dem Wert des Quotienten von ungefähr 1,42 durch die Ordnungszahl (n) der kritischen Harmonischen entspricht.

2. Verfahren nach Anspruch 1, **dadurch gekennzeichnet, dass** zur Modulation der Schaltfrequenz (fs) ein Modulationssignal (MOD) mit periodischer Signalform vorgegeben wird.

3. Verfahren nach Anspruch 1 oder 2, **dadurch gekennzeichnet, dass** zur Modulation der Schaltfrequenz (fs) maximal fünf diskrete Frequenzen ($f_{S1}$, $f_{S2}$) vorgegeben werden.

4. Verfahren nach Anspruch 2, **dadurch gekennzeichnet, dass** als Modulationssignal (MOD) ein Rechtecksignal vorgegeben wird.

5. Verfahren nach einem der Ansprüche 1 bis 4, **dadurch gekennzeichnet, dass** die Modulationsfrequenz ($f_M$) die Frequenzbandbreite um ungefähre 5 % übersteigt.

6. Schaltnetzteil, ein Schaltelement umfassend, das mittels eines Mikrocontrollers oder einer Steuerschaltung angesteuert wird, **dadurch gekennzeichnet, dass** der Mikrocontroller oder die Steuerschaltung zur Durchführung des Verfahrens nach einem der Ansprüche 1 bis 5 eingerichtet ist.

## Claims

1. Method for operating a switching power supply, which comprises a switching element, which is switched on and off by means of a switching signal ($SIG_S$) having a variable switching frequency ($f_S$), wherein to comply with EMC regulations a frequency bandwidth is predefined, within which average levels (A) of a frequency spectrum of the switching signal ($SIG_S$) can be determined, **characterised in that** the switching frequency ($f_S$) is modulated at a modulation frequency ($f_M$) greater than the frequency bandwidth, a lower limit frequency ($f_G$) is predefined to determine a maximum level of the frequency spectrum of the switching signal ($SIG_S$) and as a function of a pulse duty factor of the switching signal ($SIG_S$) as a critical harmonic of a frequency spectrum of the switching signal ($SIG_S$) without switching frequency modulation, the harmonic is set, the frequency of which is greater than the limit frequency ($f_G$) and which has the greatest interference level (A) and also in order to modulate the switching frequency ($SIG_S$), a modulation index ($\eta$) is predefined, which corresponds to the value of the quotient of approximately 1.42 by the ordinal number (n) of the critical harmonic.

**2.** Method according to claim 1, **characterised in that** a modulation signal (MOD) with periodic signal form is predefined in order to modulate the switching frequency ($f_S$).

**3.** Method according to claim 1 or 2, **characterised in that** a maximum of five discrete frequencies ($f_{S1}$, $f_{S2}$) are predefined in order to modulate the switching frequency ($f_S$).

**4.** Method according to claim 2, **characterised in that** a rectangular signal is predefined as the modulation signal (MOD).

**5.** Method according to one of claims 1 to 4, **characterised in that** the modulation frequency ($f_M$) exceeds the frequency bandwidth by approximately 5%.

**6.** Switching power supply, comprising a switching element, which is activated by means of a microcontroller or a control circuit, **characterised in that** the microcontroller or control circuit is set up to implement the method according to one of claims 1 to 5.

**Revendications**

**1.** Procédé pour faire fonctionner une alimentation à découpage, qui comprend un élément de commutation, lequel est fermé et ouvert au moyen d'un signal ($SIG_S$) de commutation de fréquence ($f_S$) de commutation variable, dans lequel, pour le respect de prescriptions de compatibilité électronique, on prescrit une largueur de bande de fréquence à l'intérieur de laquelle des niveaux (A) moyens d'un spectre de fréquence du signal ($SIG_S$) de commutation peuvent être déterminés, **caractérisé en ce que** l'on module la fréquence ($f_S$) de commutation par une fréquence ($f_M$) de modulation plus grande que la largeur de la bande de fréquence, **en ce que**, pour la détermination d'un niveau maximum du spectre de fréquence du signal ($SIG_S$) de commutation, on prescrit une fréquence ($f_S$) limite inférieure et **en ce que**, en fonction d'un rapport cyclique du signal ($SIG_S$) de commutation on fixe comme harmonique critique d'un spectre de fréquence du signal ($SIG_S$) de commutation sans modulation de la fréquence de commutation, tout harmonique dont la fréquence est plus grande que la fréquence ($f_G$) limite et qui a le niveau (A) parasite le plus grand et **en ce qu'**en outre on prescrit, pour la modulation de la fréquence ($SIG_S$) de commutation, un indice ($\eta$) modulation, qui correspond à la valeur du quotient d'environ 1,42 par le nombre (n) ordinal des harmoniques critiques.

**2.** Procédé suivant la revendication 1, **caractérisé en ce que**, pour la modulation de fréquence ($f_S$) de commutation, on prescrit un signal (MOD) de modulation ayant une forme de signal périodique.

**3.** Procédé suivant la revendication 1 ou 2, **caractérisé en ce que**, pour la modulation de fréquence ($f_S$) de commutation, on prescrit au maximum cinq fréquences ($f_{S1}$, $f_{S2}$) discrètes.

**4.** Procédé suivant la revendication 2, **caractérisé en ce que** l'on prescrit comme signal (MOD) de modulation un signal rectangulaire.

**5.** Procédé suivant l'une des revendications 1 à 4, **caractérisé en ce que** la fréquence ($f_S$) de modulation dépasse la largeur de bande de fréquence d'environ 5%.

**6.** Alimentation à découpage comprenant un élément de commutation qui est commandé au moyen d'une micro unité de commande ou d'un circuit de commande, **caractérisé en ce que** la micro unité de commande ou le circuit de commande est agencé pour effectuer le procédé suivant l'une des revendications 1 à 5.

# FIG 1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WIEMER I.** Freiprogrammierbare Ansteuerung eines Aufwärtswandlers. *Studienarbeit TU Dresden,* 30. November 2001
- **ZHANG Y et al.** EMI reduction of power supplies by Bi-Frequency modulation. *NINTH ANNUAL APPLIED POWER ELECTRONICS CONFERENCE AND EXPOSITION, 1994. APEC '94. CONFERENCE PROCEEDINGS 1994., ORLANDO, FL, USA,* 13. Februar 1994, 601-607
- **LI CAI et al.** EMI reduction of switching power supply by frequency jitter. *INDUSTRY APPLICATIONS CONFERENCE, 2005. FOURTIETH IAS ANNUAL MEETING. CONFERENCE RECORD OF THE 2005 HONG KONG, CHINA,* 02. Oktober 2005, vol. 4, 2790-2793